Europäisches Patentamt

European Patent Office

Office européen des brevets

(11) Publication number: **0 361 938**
**A2**

(12) **EUROPEAN PATENT APPLICATION**

(21) Application number: **89309926.7**

(22) Date of filing: **28.09.89**

(51) Int. Cl.⁵: **H04N 9/04 , H04N 3/15**

(30) Priority: **28.09.88 JP 243619/88**

(43) Date of publication of application:
**04.04.90 Bulletin 90/14**

(84) Designated Contracting States:
**DE FR GB**

(71) Applicant: **NIKON CORPORATION**
**2-3, Marunouchi 3-chome Chiyoda-ku**
**Tokyo(JP)**

(72) Inventor: **Takatsu, Norihiko**
**25-19-C-205, Tamagawadai 2-chome**
**Setagaya-ku**
**Tokyo(JP)**
Inventor: **Yamamoto, Tetsuya**
**1-2 Higashi 4-chome**
**Hasuda-shi Saitama-ken(JP)**
Inventor: **Suzuki, Masahiro**
**21-4 Umegaoka Midori-ku**
**Yokohama-shi Kanagawa-ken(JP)**

(74) Representative: **Burke, Steven David et al**
**R.G.C. Jenkins & Co. 26 Caxton Street**
**London SW1H 0RJ(GB)**

(54) **Solid-state image sensing device.**

(57) A solid-state image sensing device comprises a light receiving device including a plurality of light receiving elements arranged in the form of a matrix, the number of the plurality of light receiving elements in the vertical direction being equal to two times the number of the horizontal scanning lines of an image signal for one frame except for the vertical blanking duration, each of the light receiving elements generating charges dependent on the intensity of incident radiation, the light receiving elements constituting odd-numbered fields and the light receiving elements constituting even-numbered fields being alternately arrayed every two lines in the vertical direction, a green color filter being disposed for the light receiving elements of one of the adjacent two lines in the vertical direction of the light receiving elements of each of the field, red color filters and blue color filters being alternately disposed in the horizontal direction or the light receiving elements of the other line of the adjacent two lines in the vertical direction of the light receiving elements of each of the field; a horizontal transfer device for transferring charges outside the solid-state image sensing device; and a vertical transfer device for transferring charges of the light receiving elements to the horizontal transfer device.

**FIG.1**

## SOLID-STATE IMAGE SENSING DEVICE

BACKGROUND OF THE INVENTION

Field of the Invention

The present invention relates to a solid-state image sensing device for an electronic still camera or a video camera having a color filter.

Related Background Art

In the past, this kind of solid-state image sensing device has been known to have such a configuration at that shown in Figure 7. In Figure 7, a light receiving part 2-1 converts a light signal to an electrical signal. A vertical transfer part 2-2 transfers electrical charges on the light receiving part 2-1 to a horizontal transfer part 2-3. The horizontal transfer part 2-3 transfers electrical charges from the vertical transfer part 2-2 to a floating diffusion amplifier 2-4. The floating diffusion amplifier 2-4 converts the amount of transferred electrical charge from the horizontal transfer part 2-3 to a voltage signal, and outputs it. In the case of the NTSC system, the number of light receiving part 2-1 in the vertical direction becomes about 490, or the number of scanning lines 525 minus by the number of scanning lines scanned during vertical blanking. The number of transfer steps of the vertical transfer part 2-2 is the number of steps transferred for every one of the fields, so it becomes about 245. On the other hand, the number of light receiving part 2-1 in the horizontal direction is presently at most about 760 for a chip size of 2/3 inch owing to imperfect yield from mass production, etc. When color filters are formed using primary colors to filter colors for such a solid-state image sensing device, a color filter array having a repetition of R, G, B in the horizontal direction is made as shown. Let us now consider the resolution of a color image in the horizontal direction of a conventional solid-state image sensing device having such a color filter array. It is almost the resolution obtained from a green signal, and as the color image is a repetition of R, G, B, only the color resolution of about 760/3 = 253 picture cells can be obtained. As a result, a problem of a poor color resolution has been posed. On the other hand, to realize a color resolution equal to 760 picture cells in the horizontal direction by using the same structure as for a conventional solid-state image sensing device, 760 x 3 = 2280 picture cells are needed in a light receiving part. Its realization has been technically difficult.

Therefore, a so-called two-board system has been proposed in which two solid-state image sensing devices for a brightness signal and for a RGB signal are provided and in which the same subject image is entered to the two solid-state image sensing devices by an optical system. In the two-board system, however, the optical system is complex, becomes larger, and aligning the two solid-state image sensing devices is very complex, so high cost has been a problem.

SUMMARY OF THE INVENTION

In light of such problems in the past, the present invention has been devised. An object of the invnetion is to provide a solid-state image sensing device capable of obtaining a color resolution equal to the two-board system with a single solid-state image sensing device.

In order to attain this purpose, the solid-state image sensing device of the invention is arranged to have a plurality of light receiving elements and to have horizontal transfer CCDs of two steps, and the number of light receiving elements in the vertical direction is made two times the number of horizontal scanning lines for one frame except for a vertical blanking duration. In addition, using the light receiving elements of the horizontal two rows of the light receiving part as a pair, odd-numbered fields and even-numbered fields are formed. And, a color filter array is provided in which the horizontal first row of the odd-numbered and even-numbered fields is made green, and the horizontal second row is made a repetition of red and green.

Also, a color filter array in which the horizontal first row of odd-numbered and even-numbered fields is white, and the horizontal second row thereof is a repetition of red, green, and blue, may be provided. In a solid-state image sensing device having such a structure, the number of light receiving parts in the vertical direction is increased from 490 to 980 (double), and all the additional 490 light receiving parts are assigned with a green signal (or white signal). As a result of this, the horizontal resolution of a brightness signal for colorization can be improved to a resolution equal to that of the two-board system. The horizontal transfer CCD is structured in two steps, each outputting a green signal, and red and blue signals separately (or outputting a white signal, and a RGB signal), so a brightness signal and a color signal necessary for a color signal can be obtained with a simple processing circuit.

The invention is not limited to the NTSC system, but is applicable to the PAL system or the SECAM system.

BRIEF DESCRIPTION OF THE DRAWINGS

Figure 1 is a diagram illustrating the solid-state image sensing device of the first embodiment;

Figures 2A to 2I are diagrams illustrating an electrical charge transfer of the embodiment of Figure 1;

Figure 3 is a timing chart showing operation of the embodiment of Figure 1;

Figure 4 is a diagram illustrating the solid-state image sensing device of the second embodiment;

Figures 5A to 5N are diagrams illustrating the electrical charge transfer of Figure 4;

Figure 6 is a timing chart showing operation of Figure 4; and

Figure 7 is a drawing illustrating a conventional solid-state image sensing device.

DETAILED DESCRIPTION OF THE PREFERRED EMBODIMENT

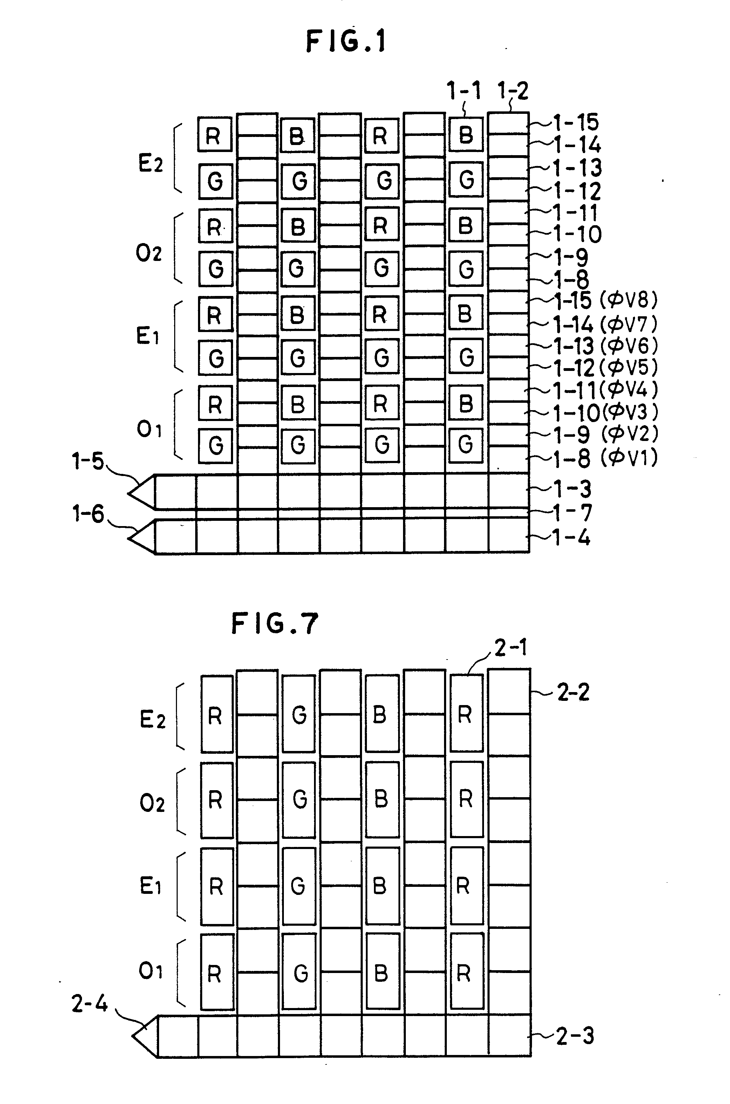

Figure 1 is a drawing illustrating the first embodiment of the present invention. It shows a structure of a solid-state image sensing device and a color filter array for·colorization.

In the embodiment of Figure 1, the light receiving part 1-1 has light receiving picture cells, i.e. light receiving elements (light receiving elements are elements for generating electrical charges dependent on the intensity of the incident radiation, for example, a photoelectric element such as a photodiode.) in the vertical direction which are two times the number of horizontal scanning lines. In the embodiment, since the number of effective horizontal scanning lines is 490, the light receiving part 1-1 is made up of about 960 (double) light emitting elements in the vertical direction, that is, about 960 picture cells. As described above, since the number of picture cells of the light receiving part 1-1 in the vertical direction is about 960, which is two times the number in the horizontal direction, the size of the light receiving part 1-1 itself in the longitudinal direction is half that of the conventional light receiving part 2-1 shown in Figure 7. In the light receiving part 1-1 such that a number of picture cells that is double that of a conventional element is provided in the vertical direction, for example, as shown in Figure 1, an odd-numbered field 01, an even-numbered field E1, an odd-numbered field 02, an even-numbered field E2, --- are formed with light receiving elements 1-1 of horizontal two rows as a pair. In such a field formed of horizontal two rows, for example, if the odd-numbered field is taken as an example, a color filter array is formed in which all of the horizontal first row of the lower side is made green (G), and the horizontal second row is made a repetition of red (R) and blue (B).

Such an array of color filters for the horizontal first and second rows in the odd-numbered field 01 is the same as for other fields E1, 02, E2, ---.

Since the transfer CCD 1-2 of the embodiment, that is, the light receiving part 1-1, has twice the density of picture cells in the vertical direction as does a conventional system, the number of transfer steps which was 245 steps in the past, is doubled to 490. The CCD 1-2 is adapted to be able to simultaneously transfer a green signal, and a red or blue signal included in one line made up of light emitting elements of the horizontal two rows.

Denoted by reference numerals 1-3 and 1-4 is a horizontal transfer CCD. In this embodiment, the horizontal transfer CCD 1-4 transfers a green signal, and the horizontal transfer CCD 1-3 transfers a red or blue signal.

Denoted by reference numerals 1-5 and 1-6 is a floating diffusion amplifier, which converts a signal charge form the horizontal transfer CCDs 1-3 and 1-4 to a voltage and outputs it.

Furthermore, a horizontal gate 1-7 has functions for transferring a signal charge of the horizontal transfer CCD 1-3 to the horizontal transfer CCD 1-4 and for not mixing the signal charges of the two horizontal transfer CCDs 1-3 and 1-4 during the horizontal transfer operation.

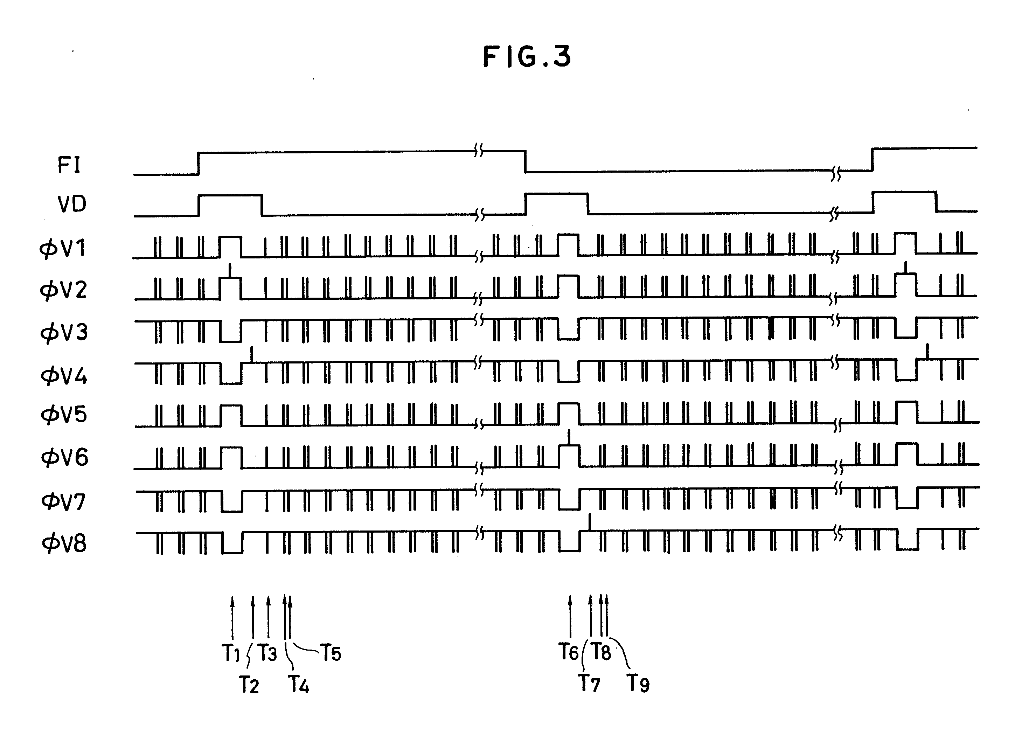

The transfer electrodes 1-8 to 1-15 of the vertical transfer CCD 1-2 correspond to the voltage applied to the electrode $\phi$V1 to $\phi$V8 of Figure 3 to be described later.

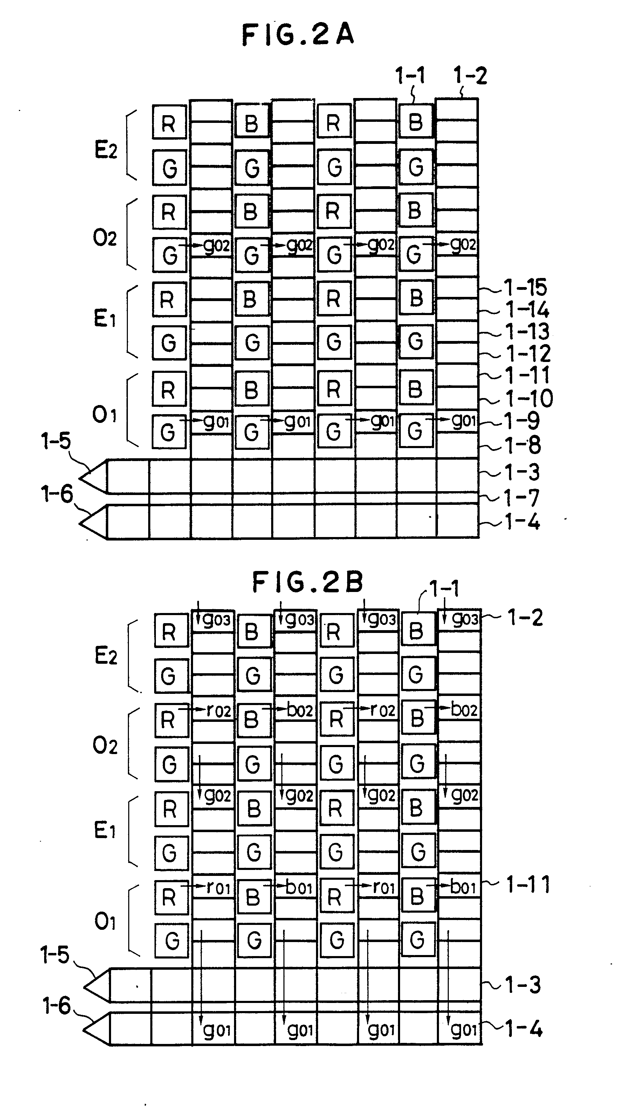

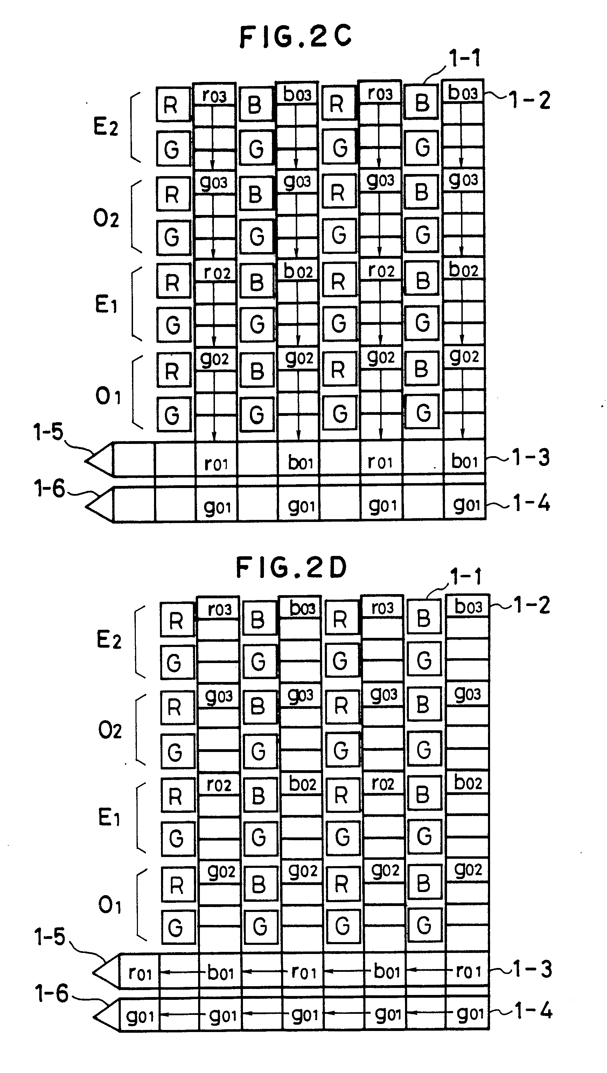

Next, the operation of the solid-state image sensing device shown in the embodiment of Figure 1 will be explained with reference to the timing chart of Figure 3 and the signal charge transfer drawings of Figures 2A to 2I.

In the timing chart of Figure 3, the symbol FI indicates a field index signal. When this signal is high, it indicates an odd-numbered field, and when low, it indicates an even-numbered field. The symbol VD is a vertical synchronization signal. The voltage applied to the electrode $\phi$V1 to $\phi$V8 for the vertical transfer electrode correspond to the vertical transfer electrodes 1-8 to 1-15 shown in Figure 1.

The operation is now to be described with reference to the signal charge transfer diagrams of Figures 2A to 2I corresponding to time T1 to T9 of Figure 3.

In the diagrams illustrating the transfer charges of Figures 2A to 2I, the explanation centers on the operation of the odd-numbered field 01 and the even-numbered field E1 closer to the horizontal transfer CCDs 1-3 and 1-4.

When the voltage applied to the electrode φV2 becomes high at time T1 of Figure 3, as shown in Figure 2A, for example, the charge g01 stored for 1/30 sec. at the light receiving part for a green signal of the odd-numbered field 01 is transferred below the electrode of the transfer electrode 1-9.

Next, at time T2 of Figure 3, since the vertical transfer CCD 1-2 is a four-phase drive CCD in this embodiment, as shown in the charge g02 transferred from the odd-numbered field 02 of Figure 2B, they are shifted two steps in the direction of the horizontal transfer CCDs 1-3, 1-4. Of course, the charge g01 of the even-numbered field 01 most near the horizontal transfer CCD 1-3 is transferred to the horizontal transfer CCD 1-4.

At time T2, the voltage applied to the electrode φV4 becomes high, for example, the charges r01, b01 stored in correspondence to the color filter array of red and blue of the horizontal second row of the odd-numbered field 01 are tansferred to the electrode of the transfer electrode 1-11.

At this stage of Figure 2B, the charge transfer from the light receiving part 1-1 of the odd-numbered fields 01, 02, --- to the vertical transfer CCD 1-2 is completed.

Next, as shown in Figure 2C, the signal charges of the vertical transfer CCD 1-2 are shifted four steps at time T3 of Figure 3. For this reason, the signal charges g01 obtained from the odd-numbered field 01 are transferred to the horizontal transfer CCD 1-4, and the charges r01, b01 are transferred to the horizontal transfer CCD 1-3 at the same time.

Next, the signal charges transferred to the horizontal transfer CCDs 1-3, 1-4 are horizontally transferred and read out to the outside for the time of the effective horizontal scanning duration of an image signal.

Next, at time T4 of Figure 3 within the horizontal blanking duration, the charge g02 obtained from the odd-numbered field 02 is transferred from the vertical transfer CCD 1-2 to the horizontal transfer CCD 1-4. In the same manner, at time T5 within the horizontal blanking duration, the signal charges r02, b02 obtained from the odd-numbered field 02 are transferred from the vertical transfer CCD 1-2 to the horizontal transfer CCD 1-3, after which they are transferred to the outside by the horizontal transfer for the effective horizontal scanning duration of an image signal.

Repetition of the above operation enables the signal charges corresponding to a green, red or blue signal read from the light receiving part of the odd-numbered fields 01, 02, --- to the vertical transfer CCDs to be read in turn into the outside in parallel by the horizontal transfer CCDs.

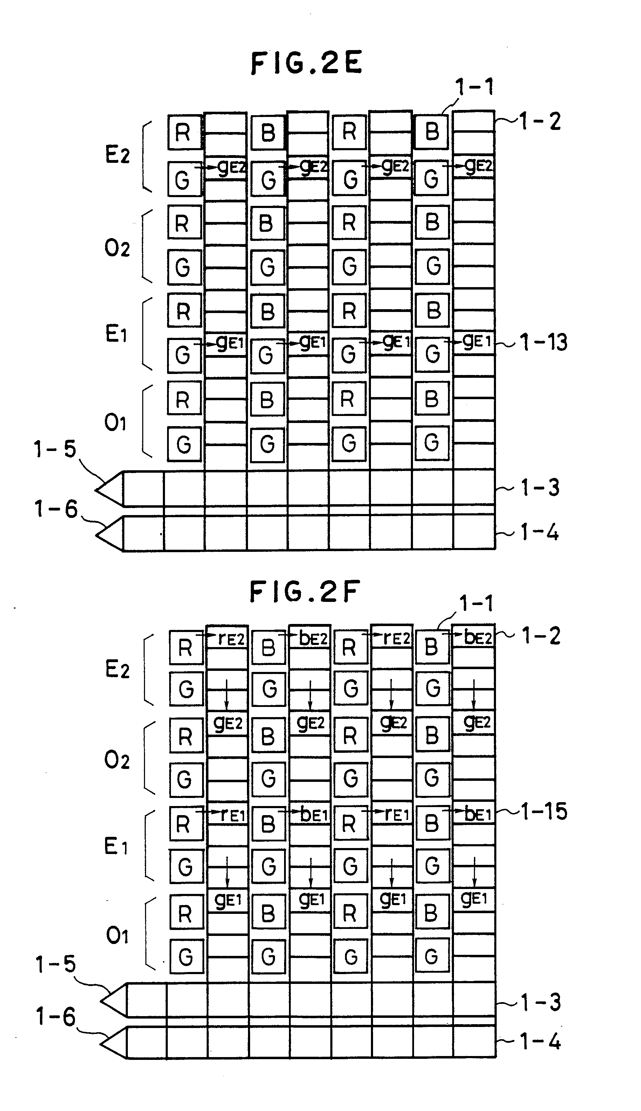

Operation of the even-numbered fields is described below. The voltage applied to the electrode φV6 becomes high at time T6 of Figure 3. As shown in Figure 2E, for example, the charge gE1 stored for 1/30 sec. in correspondence to the color filter G of the horizontal first row of the even-numbered field E1 is transferred below the transfer electrode 1-13 of the even-numbered field E1.

Next, the charges gE1, gE2 read from the light receiving part 1-1 to the vertical transfer CCD 1-2 shown in Figure 2E until immediately before time T7 of Figure 3 are shifted two steps toward the horizontal transfer CCDs.

The voltage applied to the electrode φV8 becomes high at time T7 as shown in Figure 2F. Take the odd-numbered field E1, for example. The charges rEl, bE1 stored for 1/30 sec. at the light receiving part 1-1 by the color filters made of red and blue colors are transferred below the electrode of the transfer electrode 1-15.

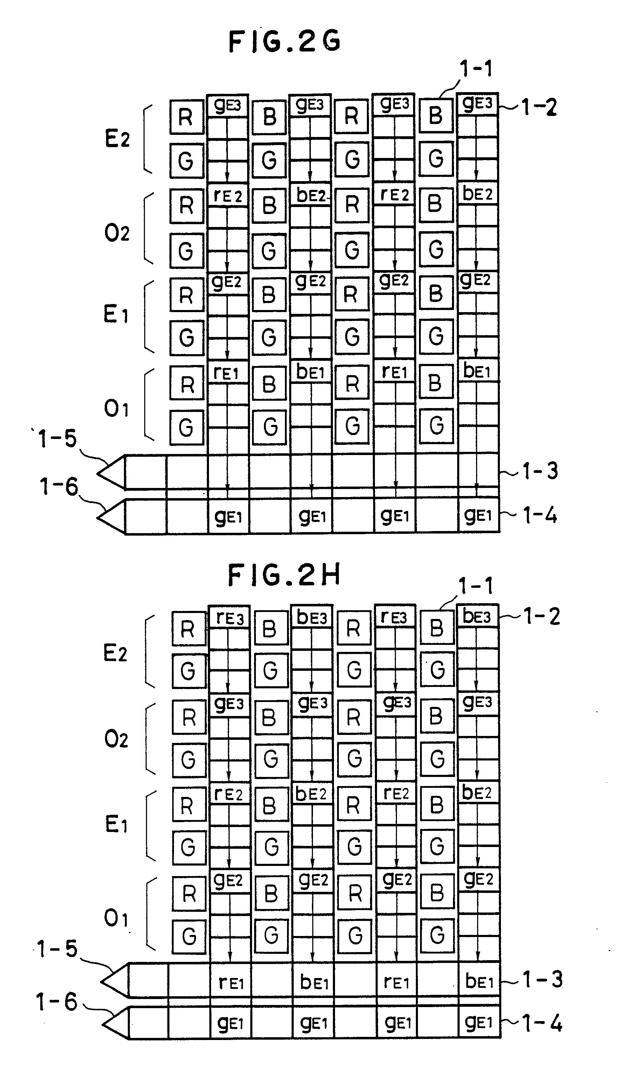

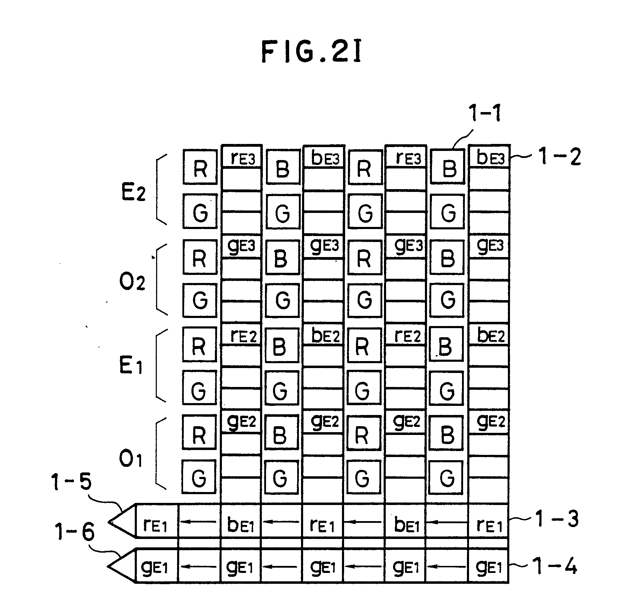

Next, at time T8 of Figure 3, the signal charge read from the light receiving part 1-1 to the vertical transfer CCD 1-2 as shown in Figure 2F are shifted four steps as shown in Figure 2G.

The charge gE1 obtained from the horizontal first row of the even-numbered field E1 most near the horizontal transfer CCDs becomes in the state when they are transferred to the horizontal transfer CCD 1-4 exclusively used for a green signal.

In a similar manner, at time T9 of Figure 3, all charges of the vertical transfer CCD 1-2 are shifted four steps toward the horizontal transfer CCDs, and the charges move as shown in Figure 2H. The charges rE1, bE1 obtained from the horizontal second row made of a repetition of red and blue color filters of the even-numbered field E1 most near the horizontal transfer CCDs at this time become in the state when they are transferred to the horizontal transfer CCD 1-3.

The pulses at time T8, T9 of Figure 3 are included in the same horizontal blanking duration.

Therefore, the charges of a green signal, a read signal, and a blue signal are transferred to the horizontal transfer CCDs 1-3, 1-4 of a two-step structure for each horizontal blanking duration in the order of the even-numbered fields E1, E2, ---. After the transfer, green signals, and red and blue signals are read in parallel by the horizontal transfer CCDs 1-3, 1-4 during a horizontal scanning.

Figure 2I shows the states in which green signals, and red and blue signals are read over the horizontal scanning duration after the signal charges gE1, rE1, and bE1 read from the light receiving part of the even-numbered field E1 are transferred to the horizontal transfer CCDs 1-3, 1-4 as shown in Figure 2H.

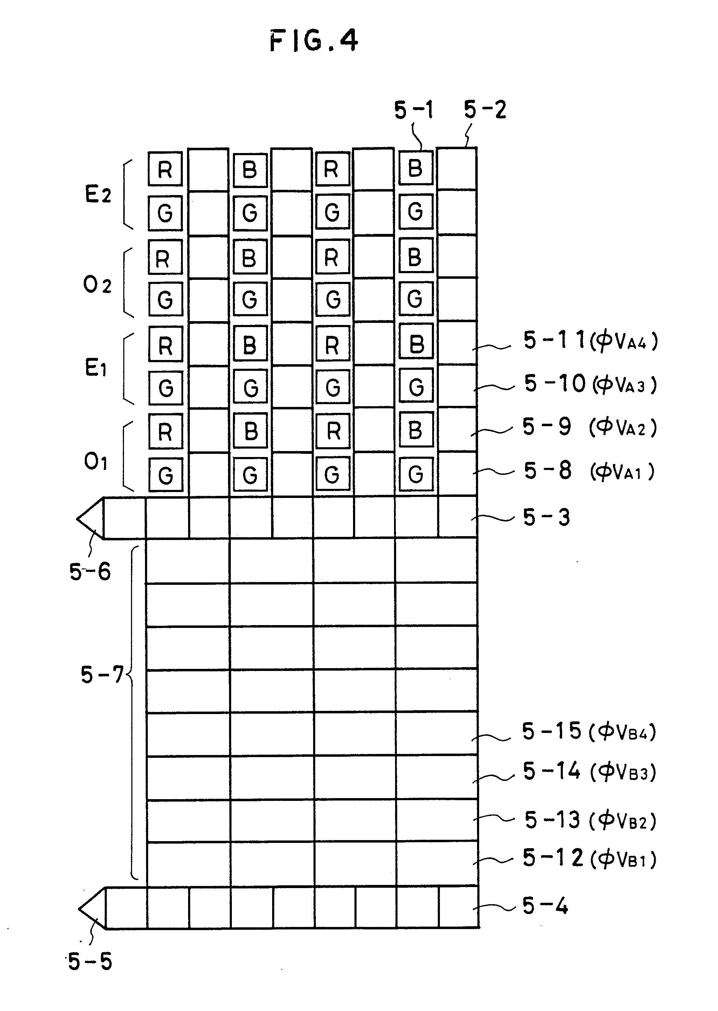

Figure 4 is a diagram illustrating the second embodiment of the present invention. In the solid-state image sensing device of this second embodiment, the number of picture cells of the light receiving part in the vertical picture cell direction is about 960 (double) picture cells, and two steps of horizontal transfer CCDs are provided in the same way as for the solid-state image sensing device of Figure 1. However, different points are that the number of the vertical transfer steps of the light receiving part is 245 (half steps) and a store part is provided between the horizontal transfer CCDs of the two steps.

To be specific with reference to Figure 4, the light receiving part 5-1 has about 960 light receiving elements in the vertical direction which are two times the number of the horizontal scanning lines. That is, the light receiving part 5-1 has about 960 picture cells in the vertical direction. This light receiving part 5-1 is formed of the odd-numbered field 01, the even-numbered field E1, the odd-numbered field 02, the even-numbered field E2, --- in sequence with the light receiving picture cells of horizontal two rows as a pair, and is provided with a color array in which the horizontal first row of each field is green (G), and the horizontal second row is made a repetition of red (R) and blue (B).

The reference numeral 5-2 is a vertical transfer CCD. In this embodiment, it has 245 steps (half) for Figure 1, that is, the same number of conventional steps of Figure 7.

In the vertical transfer CCD 5-2, the voltages to be applied to the electrode $\phi VA1$ to $\phi VA4$ are respectively applied to the vertical transfer electrodes 5-8 to 5-11 for four-phase driving.

The first horizontal transfer CCD 5-3 is provided for red and blue signals in this embodiment. The reference numeral 5-6 shows a floating diffusion amplifier which serves as an output amplifier of the first horizontal transfer CCD 5-3.

The reference numeral 5-7 is a store part. It is, for example, is formed of four-phase transfer electrodes 5-12 to 5-15 in correspondence with the odd-numbered field 01 and the even-numbered field E1, and the voltages to be applied to the electrode $\phi VB1$ to $\phi VB4$ are respectively applied to the transfer electrodes 5-12 to 5-15.

Denoted by the reference numeral 5-4 is a horizontal transfer CCD, and is used for a green signal in this embodiment. Denoted by the reference numeral 5-5 is a floating diffusion amplifier which serves as an output amplifier of the second horizontal transfer CCD 5-4.

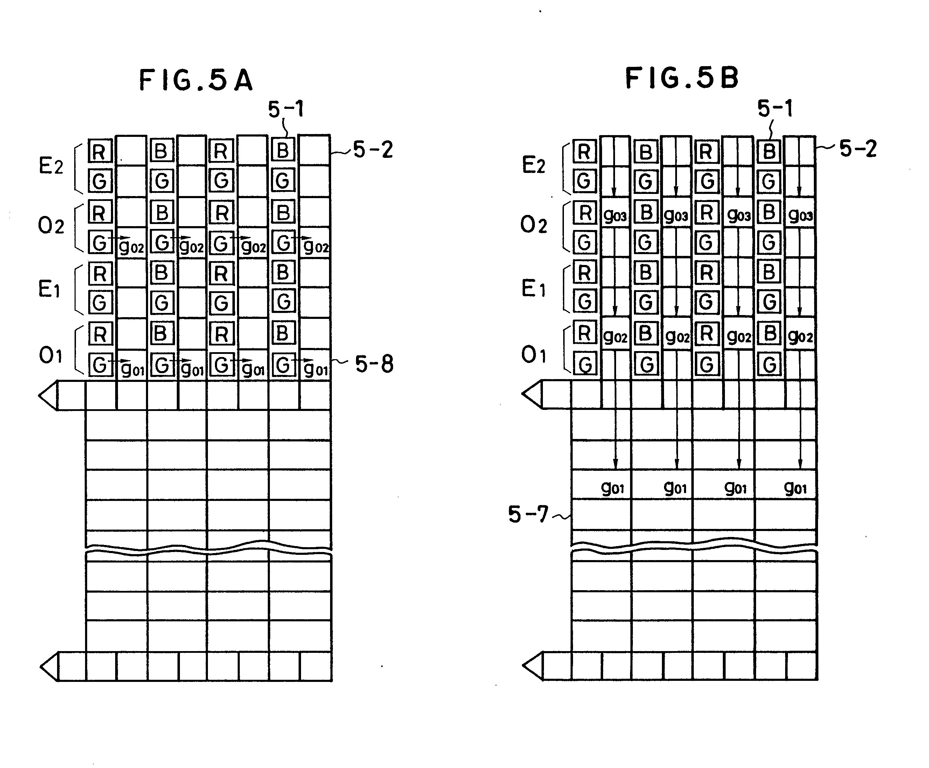

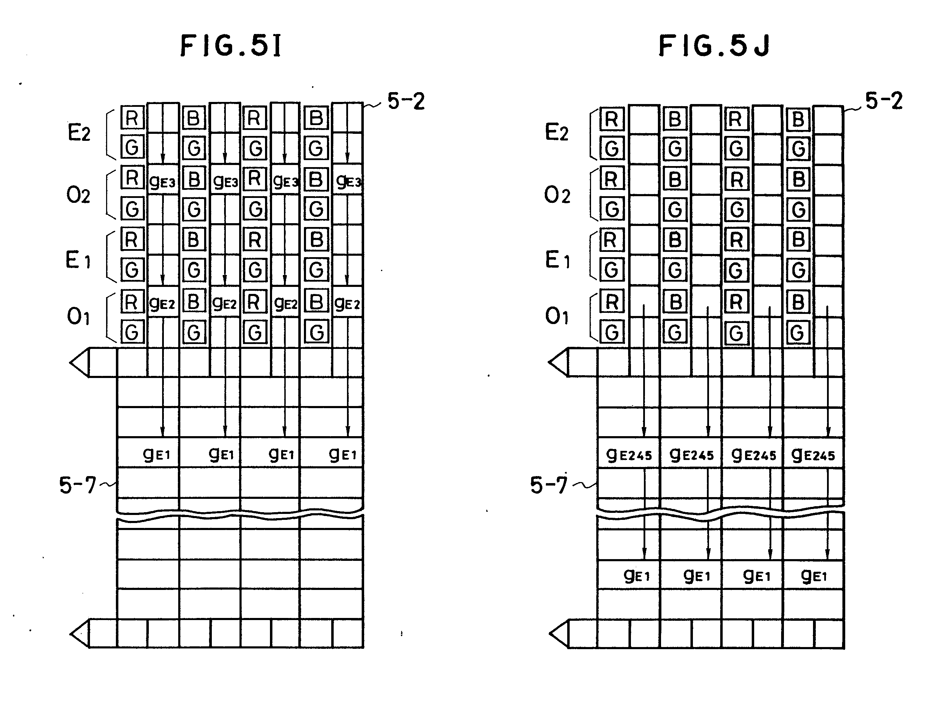

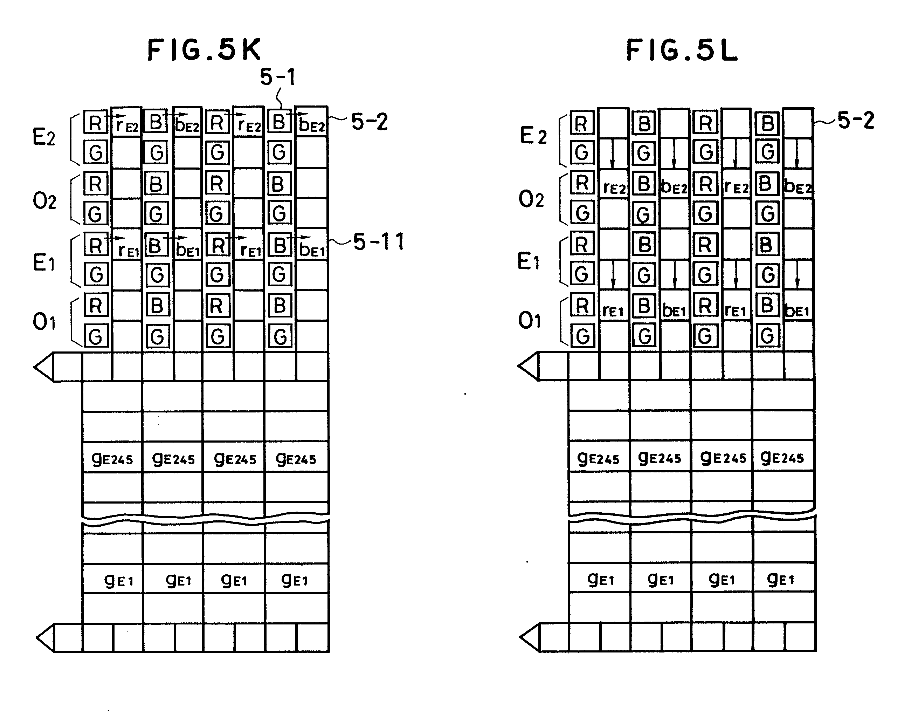

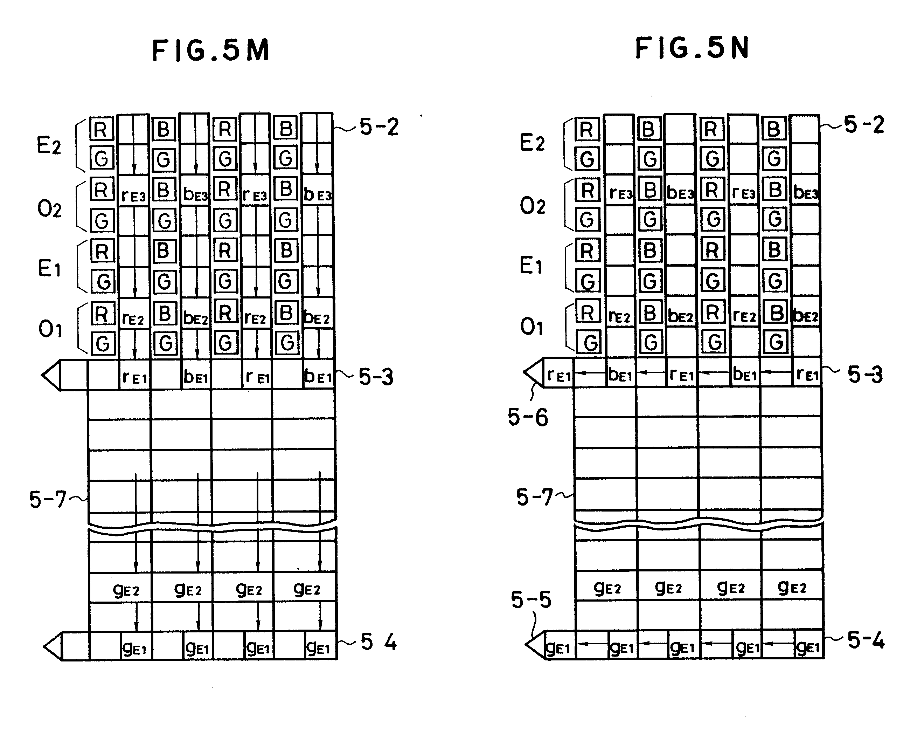

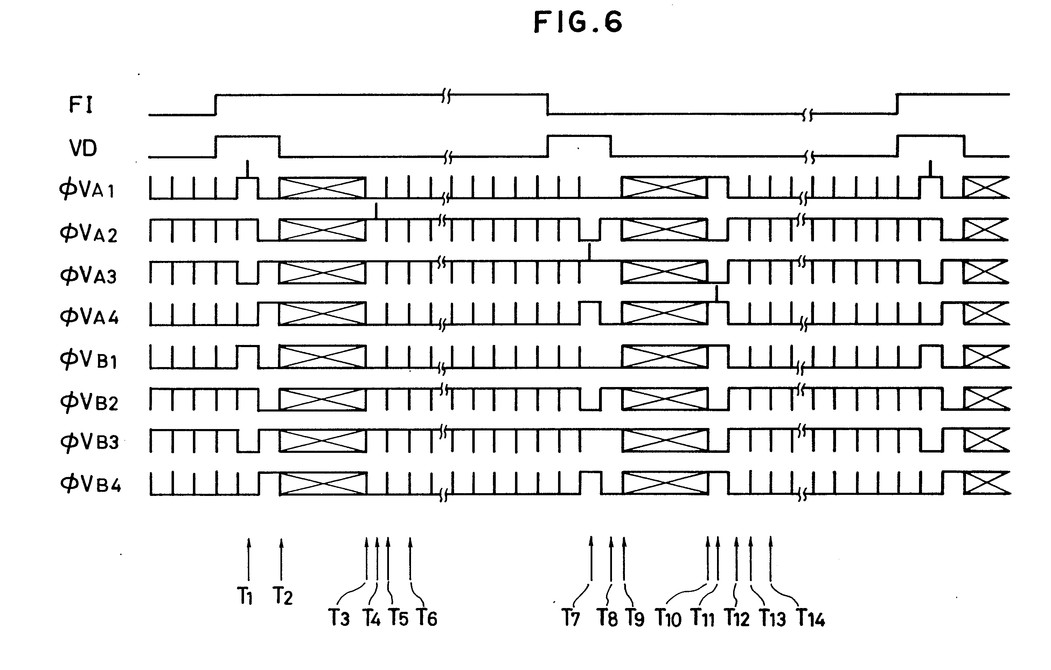

Next, the operation of the embodiment of Figure 4 will be described with reference to the timing chart of Figure 6 and the signal charge transfer diagram of Figures 5A to 5N.

First, in the timing chart of Figure 6, the symbol FI indicates a field index signal, and when said signal is high, it indicates an odd-numbered field; when low, it indicates an even-numbered field. The symbol VD indicates a vertical synchronizaton sig-

nal; the symbols $\phi VA1$ to $\phi VA4$ indicate the voltages to be applied to the electrodes corresponding to the vertical transfer electrodes 5-8 to 5-11 of Figure 4. The symbols $\phi VB1$ to $\phi VB4$ indicate the voltage to be applied to the electrode to the transfer electrode of the store part 5-7, and correspond to the transfer electrodes 5-12 to 5-15 of Figure 4.

Suppose that the voltage applied to the electrode $\phi VA1$ becomes high at time T1 of Figure 6. Then, as shown in Figure 5A, for example, the charge g01 stored for 1/30 sec. on the light receiving part 5-1 of the horizontal first row of the odd-numbered field 01 is transferred below the electrode of the transfer electrode 5-8. This point is the same as for the remaining odd-numbered field 02 and those that follow.

Next, the vertical transfer CCD 5-2 and the store part 5-7 are driven in high speed at times T2 to T3 of Figure 6, and as shown in Figure 5B, the charges g01, g02, g03, --- corresponding to the green signal on the vertical transfer CCD 5-2 are transferred to the store part 5-7.

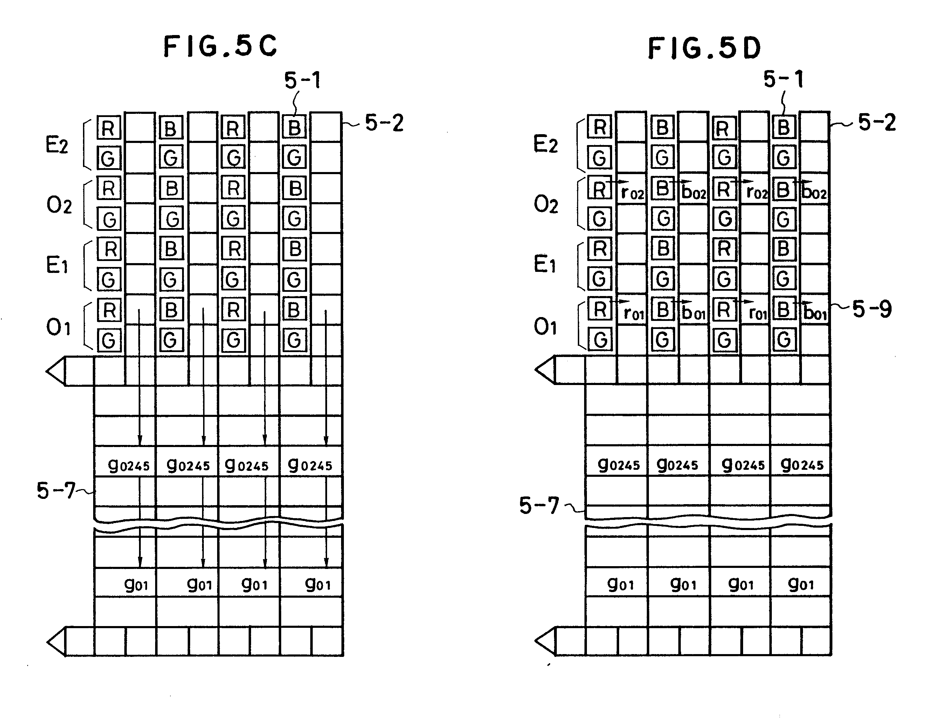

As a result of this, as shown in Figure 5C, the solid-state image sensing device enters the state such that the signal charges g01 to g0245 corresponding to the green signal of the odd-numbered fields 01 to 0245 are all transferred to the store part 5-7.

Next, at time T4 of Figure 6, the voltage applied to the electrode $\phi VA2$ becomes high. As shown in Figure 5D, for example, the charges r01, b01 stored for 1/30 sec. on the corresponding light receiving part 5-1 are transferred below the transfer electrode 5-9 corresponding to the repetition of the color filters R, B of the horizontal second row in the odd-numbered field 01. This point applied to all the odd-numbered fields of the odd-numbered field 02 and those that follow.

Next, at time T5 of Figure 6, the signal charges r01, b01 of the vertical transfer part 5-2 of the odd-numbered field 01 most near the horizontal transfer CCDs are transferred to the first horizontal transfer CCD 5-3, and the signal charge g02 corresponding to the odd-numbered field 01 in the store part 5-7 is transferred to the second horizontal transfer CCD 5-4.

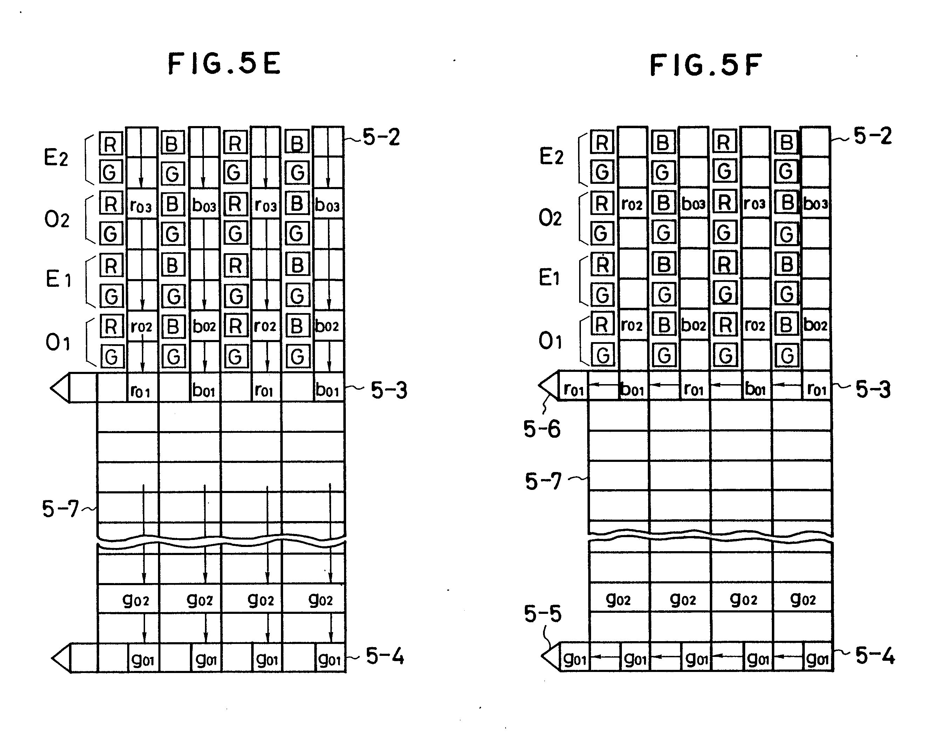

This transfer to the horizontal transfer CCDs 5-3, 5-4 shown in Figure 5F is performed during the horizontal blanking. As shown in Figure 5F, a green signal corresponding to the charge g01, and red and blue signals corresponding to the charges r01, b01 are read from the horizontal transfer CCDs 5-3, 5-4 in parallel to the outside during the effective horizontal scanning for the next image signal.

Following this, the transfer operation shown in Figures 5E and 5F is repeated for the odd-numbered fields determined by the field index FI of Figure 6, and the green signals, and the red and blue signals for all the odd-numbered fields are read out to the outside.

The operation of the even-numbered fields will be explained below.

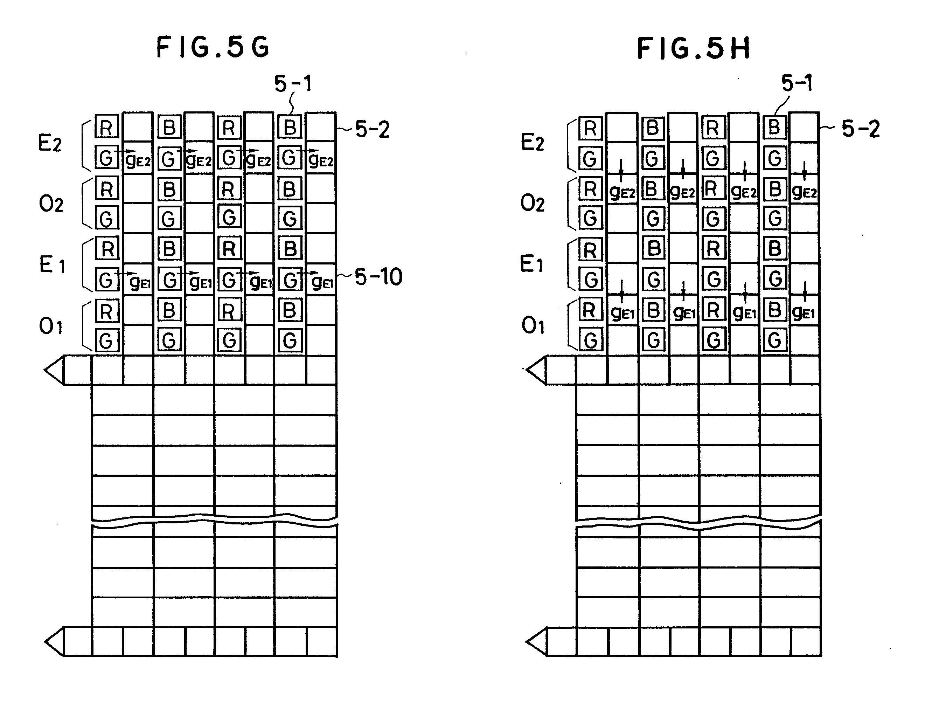

The voltage applied to the electrode $\phi$VA3 becomes high at time T7 of Figure 6, and as shown in the even-numbered field E1 of Figure 5G, the charge gE1, corresponding to the green signal, stored for 1/30 sec. at the light receiving part 5-1 is transferred below the electrode of the transfer electrode 5-10.

Next, as shown in Figure 5H, each of the charge gE1, gE2, --- read out from the light receiving part corresponding to the green signal of the even-numbered fields in Figure 5G is shifted one step in the vertical transfer CCD 5-2 at the timing of time T8 of Figure 6.

Next, the vertical transfer CCD 5-2 and the store part 5-7 are driven in high speed from the time T9 to T10 of Figure 6. The charges gE1 to gE245 corresponding to the green signal on the vertical transfer CCD 5-2 are transferred in turn to the store part 5-7 as shown in Figures 5I and 5J.

Next, the voltage applied to the electrode $\phi$VA4 becomes high at the time T11 of Figure 6, and the charges rE1, bE1 stored for 1/30 sec. at the light receiving part 5-1 made of a repetition of color filters R, B of the horizontal second row are transferred below the electrode of the transfer electrode 5-11 as shown in the even-numbered field E1 of Figure 5K.

Next, as shown in Figure 5L, the charge on the vertical transfer CCD 5-2 is shifted tow steps at time T12 of Figure 6.

Next, as shown in Figure 5M, the charge gE1 of the store part 5-7 is transferred to the second horizontal transfer CCD 5-4 at time T13 of Figure 6 at the same time when the charges rE1, rb1 of the vertical transfer CCD 5-2 are transferred to the first horizontal transfer CCD 5-3. This transfer at time T13 is performed during the horizontal blanking, and the charge transferred onto the horizontal transfer CCDs 5-3, 5-4 during the next effective horizontal scanning are read out to the outside as shown in Figure 5N.

In addition, even at time T14 in the same way as for T13, namely, in the same way as in Figure 5M, the next charges rE2, bE2 are transferred to the horizontal transfer CCD 5-3, and the charge gE2 of the store part 5-7 is transferred to the horizontal transfer CCD 5-4. Next, in the same way as shown in Figure 5N, the charge on the horizontal transfer CCDs 5-3, 5-4 are read out to the outside during the effective horizontal scanning. The similar operation will be performed for the odd-numbered fields given by the field index FI.

The third embodiment of the present invention is now to be explained.

The color filter array for the light receiving parts 1-1, 5-1 of the first embodiment of Figure 1 and the second embodiment of Figure 4 is made in such a way that for each of the odd-numbered field and the even-numbered field with the light receiving part of the horizontal two rows as a pair, the horizontal first row is all made green, and the horizontal second row is made a repetition of red and blue. However, in the third embodiment is provided a color filter array such that the horizontal first row of the odd-numbered fields and the even-numbered fields is all made white (W), and the horizontal second row is made a repetition of red, blue, and green.

In such a color filter array that the horizontal first row of the light receiving part of the horizontal two rows constituting the odd-numbered fields and the even-numbered fields is all made white (W), and the horizontal second row of those is made a repetition of red, green, and blue, the light receiving part of the color filter white (W) is made double-density. So, a resolution that can be used for the number of picture cells in the horizontal direction can be obtained, and particularly a brightness signal, i.e., a white signal itself can be obtained, further improving the color resolution.

As set forth hereinabove, according to the present invention, a green signal or a white signal corresponding to the same number of picture cells of the number of horizontal picture cells of a solid-state image sensing device can be obtained from the signal read into each of the odd-numbered fields and the even-numbered fields of a single solid-state image sensing device. Therefore, a color signal with a very high resolution can be obtained.

Moreover, since the green signal is output separately, the solid-state image sensing device has the advantage that signal processing can easily be performed.

## Claims

1. A solid-state image sensing device comprising:
light receiving means including a plurality of light receiving elements arranged in the form of a matrix, the number of said plurality of light receiving elements in the vertical direction being substantially equal to two times the number of the horizontal scanning lines of an image signal for one frame except for the vertical blanking duration, each of said plurality of light receiving elements generating charges dependent on the intensity of incident radiation thereon, said plurality of light receiving elements constituting odd-numbered fields and a plurality of light receiving elements constituting even-numbered fields being alternately arrayed every two lines in the vertical direction, a green color filter being disposed on the light receiving elements of one of adjacent two lines in the vertical direction of said light receiving elements of each of said fields, red color filters and blue color filters being alternately disposed in the horizontal direction on the light receiving elements of the other line of said adjacent two lines;

horizontal transfer means for transferring charges outside said solid-state image sensing device;
and

vertical transfer means for transferring charges of said plurality of light receiving elements to said horizontal transfer means.

2. A solid-state image sensing device according to claim 1, wherein said horizontal transfer means has a first transfer part for transferring the charges of one of the lines of each of said pair outside said solid-state image sensing device, and a second transfer part for transferring charges of the other line of each of said pair outside said solid-state image sensing device.

3. A solid-state image sensing device according to claim 2, having a third transfer part wherein said vertical transfer means transfers the charges of the light receiving elements of each of said pair to said first transfer part, and said horizontal transfer means transfers the charges of the light receiving elements of the other line of each of said pair to said second transfer part.

4. A solid-state image sensing device according to claim 1, wherein each of said odd-numbered fields and said even-numbered fields has the same number of light receiving elements in the horizontal direction as the light receiving picture cells in the horizontal direction in the NTSC system, the PAL system or the SECAM system.

5. A solid-state image sensing device comprising:

light receiving means including a plurality of light receiving elements arranged in the form of a matrix, the number of said plurality of light receiving elements in the vertical direction being substantially equal to two times the number of the horizontal scanning lines of an image signal for one frame except for the vertical blanking duration, each of said plurality of said light receiving elements generating charges dependent on the intensity of incidence radiation thereof, said plurality of light receiving elements constituting odd-numbered fields and a plurality of light receiving elements constituting even-numbered fields being alternately arrayed every two lines in the vertical direction, a white color filter being disposed on the light receiving elements of one of adjacent two lines in the vertical direction of said light receiving elements of each of said field, red, green and blue color filters being repeatedly disposed in the horizontal direction on the light receiving elements of the other line of said adjacent two lines;

horizontal transfer means for transferring charges outside said solid-state image sensing device;
and

vertical transfer means for transferring charges of a plurality of said light receiving elements to said horizontal transfer means.

6. A solid state image sensing device according to claim 5, wherein said horizontal transfer means has a first transfer part for transferring the charges of one of the lines of each of said pair outside said solid-state image sensing device, and a second transfer part for transferring the charges of the other line of each of said pair outside said solid-state image sensing device.

7. A solid-state image sensing device according to claim 6, having a third transfer part wherein said vertical transfer means transfers the charges of the light receiving elements of each of said pair to said first transfer part, and said horizontal transfer means transfers the charges of said light receiving elements of the other line of each of said pair to said second transfer part.

8. A solid-state image sensing device according to claim 5, wherein each of said odd-numberd fields and said even-numbered fields has the same number of light receiving elements in the horizontal direction as the light receiving picture cells in the horizontal direction in the NTSC system, the PAL system or the SECAM system.

9. An image sensing device comprising a matrix of light receiving elements from which can be derived an image signal representing successive horizontal lines of an image received by said elements, each image line being represented by signals derived from a succession of first elements arranged to be responsive to substantially the same colour component (G;W) of the received light,

characterised in that each horizontal line is represented by signals derived not only from said first elements but also from further elements each vertically displaced with respect to a respective first element, said further elements being responsive to different colour components (R,B;R,G,B).

10. A device as claimed in claim 9, wherein said first elements are aligned with respect to each other so as to form a first line of elements and each said further element is displaced in the same sense with respect to the respective first element so that the further elements form a further line of elements vertically displaced with respect to said first line.

# FIG.1

# FIG.7

## FIG.2A

## FIG.2B

## FIG. 2C

## FIG. 2D

# FIG.2E

# FIG.2F

# FIG. 2G

# FIG. 2H

# FIG.2I

# FIG.3

FI

VD

$\phi$V1

$\phi$V2

$\phi$V3

$\phi$V4

$\phi$V5

$\phi$V6

$\phi$V7

$\phi$V8

T1  T3  T5
T2  T4

T6  T8  T9
T7

EP 0 361 938 A2

# FIG.4

# FIG.5A

5-1

5-2

E2 { R    B    R    B
     G    G    G    G

O2 { R    B    R    B
     G  $g_{02}$ G $g_{02}$ G $g_{02}$ G $g_{02}$

E1 { R    B    R    B
     G    G    G    G

O1 { R    B    R    B
     G  $g_{01}$ G $g_{01}$ G $g_{01}$ G $g_{01}$   5-8

# FIG.5B

5-1

5-2

E2 { R    B    R    B
     G    G    G    G

O2 { R  $g_{03}$ B $g_{03}$ R $g_{03}$ B $g_{03}$
     G    G    G    G

E1 { R    B    R    B
     G    G    G    G

O1 { R  $g_{02}$ B $g_{02}$ R $g_{02}$ B $g_{02}$
     G    G    G    G

$g_{01}$   $g_{01}$   $g_{01}$   $g_{01}$

5-7

EP 0 361 938 A2

**FIG.5C**

**FIG.5D**

EP 0 361 938 A2

## FIG.5E

$E_2$: R | B | R | B | 5-2
$\quad$ G | G | G | G
$O_2$: R $r_{03}$ | B $b_{03}$ | R $r_{03}$ | B $b_{03}$
$\quad$ G | G | G | G
$E_1$: R | B | R | B
$\quad$ G | G | G | G
$O_1$: R $r_{02}$ | B $b_{02}$ | R $r_{02}$ | B $b_{02}$
$\quad$ G | G | G | G

$r_{01}$ | $b_{01}$ | $r_{01}$ | $b_{01}$ — 5-3

5-7

$g_{02}$ | $g_{02}$ | $g_{02}$ | $g_{02}$

$g_{01}$ | $g_{01}$ | $g_{01}$ | $g_{01}$ — 5-4

## FIG.5F

$E_2$: R | B | R | B | 5-2
$\quad$ G | G | G | G
$O_2$: R $r_{02}$ | B $b_{03}$ | R $r_{03}$ | B $b_{03}$
$\quad$ G | G | G | G
$E_1$: R | B | R | B
$\quad$ G | G | G | G
$O_1$: R $r_{02}$ | B $b_{02}$ | R $r_{02}$ | B $b_{02}$
$\quad$ G | G | G | G

$r_{01}$ ← $b_{01}$ ← $r_{01}$ ← $b_{01}$ ← $r_{01}$ — 5-3

5-6

5-7

$g_{02}$ | $g_{02}$ | $g_{02}$ | $g_{02}$

5-5

$g_{01}$ ← $g_{01}$ ← $g_{01}$ ← $g_{01}$ ← $g_{01}$ — 5-4

FIG.5G

FIG.5H

EP 0 361 938 A2

# FIG.5I

E2  R B R B ~ 5-2
    G G G G

O2  R $g_{E3}$ B $g_{E3}$ R $g_{E3}$ B $g_{E3}$
    G G G G

E1  R B R B
    G G G G

O1  R $g_{E2}$ B $g_{E2}$ R $g_{E2}$ B $g_{E2}$
    G G G G

$g_{E1}$  $g_{E1}$  $g_{E1}$  $g_{E1}$

5-7

# FIG.5J

E2  R B R B ~ 5-2
    G G G G

O2  R B R B
    G G G G

E1  R B R B
    G G G G

O1  R B R B
    G G G G

$g_{E245}$  $g_{E245}$  $g_{E245}$  $g_{E245}$

5-7

$g_{E1}$  $g_{E1}$  $g_{E1}$  $g_{E1}$

EP 0 361 938 A2

# FIG.5K

E2 {
R  r$_{E2}$  B  b$_{E2}$  R  r$_{E2}$  B  b$_{E2}$  — 5-2
G     G     G     G

O2 {
R     B     R     B
G     G     G     G

E1 {
R  r$_{E1}$  B  b$_{E1}$  R  r$_{E1}$  B  b$_{E1}$  — 5-11
G     G     G     G

O1 {
R     B     R     B
G     G     G     G

5-1

g$_{E245}$  g$_{E245}$  g$_{E245}$  g$_{E245}$

g$_{E1}$  g$_{E1}$  g$_{E1}$  g$_{E1}$

# FIG.5L

E2 {
R     B     R     B
G     G     G     G     — 5-2

O2 {
R  r$_{E2}$  B  b$_{E2}$  R  r$_{E2}$  B  b$_{E2}$
G     G     G     G

E1 {
R     B     R     B
G     G     G     G

O1 {
R  r$_{E1}$  B  b$_{E1}$  R  r$_{E1}$  B  b$_{E1}$
G     G     G     G

g$_{E245}$  g$_{E245}$  g$_{E245}$  g$_{E245}$

g$_{E1}$  g$_{E1}$  g$_{E1}$  g$_{E1}$

EP 0 361 938 A2

## FIG.5M

$E_2$   R   B   R   B   5-2
  G   G   G   G

$O_2$   R $r_{E3}$ B $b_{E3}$ R $r_{E3}$ B $b_{E3}$
  G   G   G   G

$E_1$   R   B   R   B
  G   G   G   G

$O_1$   R $r_{E2}$ B $b_{E2}$ R $r_{E2}$ B $b_{E2}$
  G   G   G   G

$r_{E1}$   $b_{E1}$   $r_{E1}$   $b_{E1}$   5-3

5-7

$g_{E2}$   $g_{E2}$   $g_{E2}$   $g_{E2}$

$g_{E1}$   $g_{E1}$   $g_{E1}$   $g_{E1}$   5 4

## FIG.5N

$E_2$   R   B   R   B   5-2
  G   G   G   G

$O_2$   R $r_{E3}$ B $b_{E3}$ R $r_{E3}$ B $b_{E3}$
  G   G   G   G

$E_1$   R   B   R   B
  G   G   G   G

$O_1$   R $r_{E2}$ B $b_{E2}$ R $r_{E2}$ B $b_{E2}$
  G   G   G   G

$r_{E1}$   $b_{E1}$   $r_{E1}$   $b_{E1}$   $r_{E1}$   5-3

5-6

5-7

$g_{E2}$   $g_{E2}$   $g_{E2}$   $g_{E2}$

5-5

$g_{E1}$   $g_{E1}$   $g_{E1}$   $g_{E1}$   $g_{E1}$   5-4

EP 0 361 938 A2

FIG.6